# EUROPÄISCHE PATENTSCHRIFT

(11) **EP 3 347 109 B1**
(45) Veröffentlichungstag und Bekanntmachung des Hinweises auf die Patenterteilung: **06.01.2021**
(21) Anmeldenummer: 16788410.5
(22) Anmeldetag: 07.09.2016
(51) Int. Cl.: A63F 13/24, A63F 13/98, D06N 7/00

(54) **ABNEHMBARER ÜBERZUG FÜR EINE STEUEREINHEIT**
REMOVABLE COVER FOR A CONTROL UNIT
GARNITURE DE PROTECTION AMOVIBLE POUR MODULE DE COMMANDE

(30) Priorität: 10.09.2015 DE 102015115235
(43) Veröffentlichungstag der Anmeldung: 18.07.2018
(73) Patentinhaber: Smart Grip GmbH, 21107 Hamburg (DE)
(72) Erfinder: WANNENMACHER, K. Deniz, 22087 Hamburg (DE)
(74) Vertreter: Raffay & Fleck
(86) Internationale Anmeldenummer: PCT/DE2016/000338
(87) Internationale Veröffentlichungsnummer: WO 2017/041777

(56) Entgegenhaltungen:
- EP-A1- 0 997 174
- EP-A1- 1 748 097
- US-A1- 2002 135 457
- US-A1- 2014 141 891

## Beschreibung

Die vorliegende Erfindung betrifft einen abnehmbaren Überzug für eine Eingabeeinrichtungen aufweisende Steuereinheit, insbesondere für einen Controller für Spielkonsolen oder PCs, nach dem Oberbegriff des Anspruchs 1.

Steuereinheiten zum Steuern programmtechnischer Abläufe, wie insbesondere Controller für Spielkonsolen oder PCs, werden von den jeweiligen Anwendern häufig intensiv und lang andauernd benutzt. Hier sind insbesondere die Nutzer von Spielkonsolen und PCs zu nennen, die teilweise über mehrere Stunden hinweg ihrem Hobby nachgehen und Videospiele oder Computerspiele spielen. Zum Beispiel werden so genannte LAN-Partys organisiert und abgehalten, anlässlich derer Computerspieler über mehrere Stunden an aufeinanderfolgenden Tagen auf vernetzten Computern spielen und dabei die entsprechenden Steuereinheiten zum Bedienen der Videospiele entsprechend durchgehend einsetzen und bedienen.

Typische moderne Steuereinheiten dieser Art sind in etwa hörnchenförmig gebildet mit zwei Griffabschnitten und einem die beiden Griffabschnitte verbindenden mittleren Abschnitt. Die Griffabschnitte werden während des Spielens jeweils mit einer Hand gehalten. Verschiedene Eingabeeinrichtungen wie Steuerkreuze, Taster oder Schalter und so genannte Analog-Sticks werden dabei mit Daumen und/oder Zeigefinger, teilweise auch mit weiteren Fingern der Hände bedient, um Spielabläufe zu steuern und Aktionen oder Funktionen im Spiel auszulösen.

Nicht allein bloß aufgrund der Umgebungstemperatur und des Kontaktes der Handinnenflächen mit der jeweiligen Steuereinheit, sondern auch aufgrund der beim Spielen entstehenden Anspannung des Spielers ist häufig eine erhöhte Schweißbildung an den Handinnenflächen ein Problem. Durch diese Schweißbildung verlieren die Spieler den sicheren Griff zu und an den Kunststoffflächen der Steuereinheiten, können so die häufig in schneller Abfolge und mit verschiedenen Betätigungen der einzelnen Eingabeeinrichtungen (Schalter, Taster, Steuerkreuze, Analog-Sticks und dergleichen) auszuführenden Steuerbefehle nicht mehr sicher ausüben, verlieren damit die Kontrolle über das Spiel, zum Beispiel über die von ihnen in einem Computer- oder Videospiel geführten Helden und Charaktere. Dieser Umstand wird von vielen Anwendern und Spielern als sehr störend empfunden.

Darüber hinaus ist der an den Handinnenflächen gebildete Schweiß für das Material der Steuereinheiten schädlich, beschädigt nicht bloß deren Oberflächen, sondern kann, insbesondere dann, wenn er in die Bereiche der Eingabeeinrichtungen vor- und dort in das Gehäuse der Steuereinheiten eindringt, Schäden verursachen und zu einem Funktionsausfall führen. Dies ist nicht nur deshalb ärgerlich, da in solchem Falle eine neue Steuereinheit anzuschaffen ist, sondern für einen Spieler auch daher in höchstem Maße unerwünscht, da dies zu einem abrupten Ende seines Spieles führen kann, wenn er nämlich wesentliche Steuer- und Kontrollfunktionen, die für das Bedienen des Spiels erforderlich sind, nicht mehr ausführen kann. Viele Intensivspieler bevorraten deshalb sogar Ersatzsteuereinheiten für derartige Fälle eines Ausfalls.

Um den hier aufgezeigten Problemen zu begegnen, sind bereits abnehmbare Überzüge vorgeschlagen worden, die für eine verbesserte Griffigkeit der Steuereinheiten sorgen und die dabei auch eine gewisse schweißabsorbierende Funktion ausüben sollen. So ist zum Beispiel in der EP 1 064 058 B1 für eine solche Steuereinheit eine Abdeckung im Griffbereich vorgeschlagen worden, die die Griffigkeit der Steuereinheit beim Bedienen verbessern und dabei möglicherweise auftretende Handfeuchtigkeit aufnehmen soll. Der dort offenbarte Überzug wird strumpfartig über den Griff einer Steuereinheit gezogen und *ist* aus *einem* dehnbaren elastischen Material gefertigt. Alternativ kann ein entsprechender Überzug auch als klappenartiges Element ausgebildet und um den Griffabschnitt der Steuereinheit gelegt werden. Das Material soll gemäß einer besonderen Variante des in dieser Schrift offenbarten Überzuges waschbar gestaltet sein.

Ein weiteres Beispiel eines abnehmbaren Überzugs für eine Steuereinheit ist in der EP 0 997 174 A1 offenbart. Der dort offenbarte Überzug zeigt alle Merkmalen des Oberbegriffs des Anspruchs 1 dieser Anmeldung. Er ist aus einem in der Fläche elastischen Material gebildet und insbesondere mehrschichtig aufgebaut. Eine oberste und äußerste Schicht kann dabei aus einem Material bestehen, wie es typischerweise im Bekleidungssektor eingesetzt wird, wobei hier Baumwolle, Jersey oder Nylon genannt sind. Eine mittlere Schicht ist durch ein elastisches, nach Krafteinwirkung rückstellfähiges Material gebildet, wobei diese Schicht als insbesondere aus einem geschäumten, nachgiebigen Kunststoffmaterial gebildet beschrieben ist, als Material insbesondere Neopren genannt wird. Alternativ wird hier Isopren als ein mögliches derartiges Material erwähnt. In dieser Schrift ist weiter ausgeführt, dass das Material, aus dem der Überzug gebildet ist, insbesondere ein solches sein kann, wie es aus der Herstellung von Taucheranzügen und Wetsuits bekannt ist. Eine dritte Schicht wird als auf der Innenseite befindliche Schicht aus einem Material beschrieben, das eine rutschfeste Verbindung mit dem Gehäuse der Steuereinheit gewährleistet. Auch der in dieser Schrift offenbarte Überzug soll abnehmen- und waschbar sein.

Zudem offenbart die GB 249 856 7 einen Überzug für elektrische Geräte beinhaltend eine äußere Deckschicht, eine elastische Mikrofaser-Innenschicht aufweisend eine Plissiergestalt, die einen polierenden/säubernden Effekt auf das elektrische Gerät hat, sowie ein zwischen der äußeren Deckschicht und der elastischen Mikrofaser-Innenschicht angeordnetes Aussteifungselement zum physikalischen Schutz des elektrischen Gerätes.

Des Weiteren offenbaren die DE 196 35 170 C1 sowie die DE 43 18 500 A1, dass Abstandsgewirke besonders geeignet sind für die Aufnahme, Speicherung und ggf. Abführung von Feuchtigkeit von Oberflächen und Körpern.

Aus der US 2002 / 135457 A1 ist eine faltbare Tastatur bekannt, welche aus mehreren Schichten gebildet ist.

Aus der US 2014 / 0141891 A1 ist ein Überzug für einen Controller einer Spielekonsole bekannt, wobei der Überzug aus einer feuchtigkeitsabweisenden, feuchtigkeitsanziehenden und einer Oberschicht besteht.

Wenngleich die vorbekannten abnehmbaren Überzüge bereits Kernprobleme, wie sie im Zusammenhang mit dem Gebrauch von Steuereinheiten bestehen und oben beschrieben sind, adressieren, vermögen sie diese noch nicht in vollends zufriedenstellende Weise zu lösen. Dies zeigt sich letztlich auch dadurch, dass zu den genannten Veröffentlichungen und den darin geschilderten technischen Entwicklungen gehörende Produkte am Markt nicht präsent sind. Es besteht hier also weiterhin ein Verbesserungsbedarf, um entsprechende abnehmbare Überzüge hinsichtlich ihres Gebrauchskomforts und insbesondere der feuchtigkeitsabsorbierenden Wirkung zu verbessern und damit anwendungsfreundlicher zu gestalten.

Wenngleich die vorbekannten abnehmbaren Überzüge bereits Kernprobleme, wie sie im Zusammenhang mit dem Gebrauch von Steuereinheiten bestehen und oben beschrieben sind, adressieren, vermögen sie diese noch nicht in vollends zufriedenstellende Weise zu lösen. Dies zeigt sich letztlich auch dadurch, dass zu den genannten Veröffentlichungen und den darin geschilderten technischen Entwicklungen gehörende Produkte am Markt nicht präsent sind. Es besteht hier also weiterhin ein Verbesserungsbedarf, um entsprechende abnehmbare Überzüge hinsichtlich ihres Gebrauchskomforts und insbesondere der feuchtigkeitsabsorbierenden Wirkung zu verbessern und damit anwendungsfreundlicher zu gestalten.

Diese Aufgabe löst die vorliegende Erfindung. Hierzu wird erfindungsgemäß ein abnehmbarer Überzug für eine Eingabeeinrichtungen aufweisende Steuereinheit, insbesondere für einen Controller für Spielkonsolen oder PCs, der hinsichtlich seiner Formgebung an die Form der zu überdeckenden Bereiche der Steuereinheiten passgenau angepasst ist und aus einem mehrlagigen Flächenmaterial besteht, welches wenigstens eine textile äußere Deckschicht und eine elastische und feuchtigkeitsabsorbierende Schicht aufweist, dahingehend weitergebildet, dass die elastische und feuchtigkeitsabsorbierende Schicht durch einen Abstandsmaschen- oder -webstoff gebildet ist.

Elastisch im Hinblick auf die elastische und feuchtigkeitsabsorbierende Schicht bedeutet hierbei insbesondere elastisch in Richtung einer Flächennormalen dieser Schicht. Elastisch kann - muss dies jedoch nicht - aber auch eine Elastizität in wenigstens einer innerhalb der Fläche der Schicht liegenden Richtung umfassen.

Ein Abstandsmaschen- oder -webstoff ist ein aus Fäden oder Filamenten hergestelltes Stoffprodukt, in der Regel textile Natur, welches durch Vermaschen, insbesondere Wirken oder Stricken, oder durch Webtechnik gebildet ist und welches zwei flächig ausgebildete gewebte oder vermaschte Schichten und wenigstens einen zwischen diesen Schichten geführten, die Schichten miteinander verbindenden, jedoch auch auf Abstand haltenden Abstandsfaden gebildet ist. Der Abstandsfaden ist dabei typischerweise ein vergleichsweise starrer Faden, häufig aus einem Kunststoffmaterial, vereinzelt auch aus Glasfaser, der einerseits den Abstand der beiden Ebenen aufrechterhält, andererseits eine gewisse Elastizität in sich trägt und so die Elastizität relativ zur Flächennormalen des Gesamtstoffes bedingt. Ein Beispiel für einen derartigen Stoff ist in der EP 1 748 097 A1 beschrieben. Solche Stoffe werden typischerweise als Matratzenbezüge, Sitzbezüge oder zum Auskleiden von Fahrzeuginnenräumen, hier insbesondere des sog. Fahrzeughimmels, eingesetzt.

Die wesentliche Erkenntnis der Erfindung liegt nun darin, einen solchen Abstandsmaschen- oder -webstoff in einer an sich artfremden Weise für die Bildung eines Überzuges für eine Steuereinheit zu verwenden. Dies geschieht deshalb, da der Erfinder erkannt hat, dass ein solcher Stoff sich hierfür besonders gut eignet und hervorragende Eigenschaften in dem Endprodukt bedingt. Denn ein solcher Stoff ist in hohem Maße atmungsaktiv und feuchtigkeitsabsorbierend auf der einen Seite, bedingt auf der anderen Seite aufgrund seiner Elastizität in Richtung der Flächennormalen und aufgrund der sonstigen ihm eigenen Eigenschaften eine hervorragende Haptik bei gleichzeitig vergleichsweise geringem Dickenmaß der entsprechend mit diesem Stoff gebildeten Schicht. Dadurch kann zum einen ein hinsichtlich der Feuchtigkeitsabsorption sehr effektiver und wirksamer Überzug erhalten werden, der zum anderen mit vergleichsweise geringer Schichtdicke auskommt und damit den Bedienkomfort der Eingabeeinheit nicht beeinträchtigt, vielmehr aufgrund der feuchtigkeitsaufnehmenden Wirkung und der guten Durchlüftung ein sehr angenehmes Halte- und Bediengefühl der mit diesem Überzug versehenen Steuereinheit bewirkt.

Grundsätzlich kann hinsichtlich des mehrschichtigen bzw. mehrlagigen Aufbaus des Flächenmaterials, aus dem der abnehmbare Überzug erfindungsgemäß besteht, die textile äußere Deckschicht durch eine Deckschicht des Abstandsmaschen- oder - webstoffs gebildet sein. Allerdings ist es im Rahmen der Erfindung auch möglich, und wird dies derzeit auch bevorzugt, die textile äußere Deckschicht durch eine gesonderte, auf eine Außenfläche des Abstandsmaschen- oder -webstoffs aufgebrachte Textilschicht zu bilden. Denn auf diese Weise kann diese textile äußere Deckschicht unabhängig von den Beschränkungen und Rahmenbedingungen, die bei der Bildung derjenigen Außenflächen des Abstandsmaschen- oder -webstoffs, die der Außenseite des Überzuges zugewandt ist, gegeben sind, gebildet werden. So kann die textile äußere Deckschicht insbesondere so gestaltet werden, dass sie eine besonders angenehme Haptik hervorruft und zudem die feuchtigkeitsaufnehmende des Überzuges Wirkung verstärkt. Dies kann zum Beispiel dadurch geschehen, dass die textile äußere Deckschicht ein Polschlingen ausbildendes Textil ist, wie zum Beispiel ein Frottee. Derartige Textilien sind für ihre besonders gute feuchtigkeitsaufnehmenden Eigenschaften bekannt. Auch kann die äußere textile Deckschicht aus Microfasern gebildet sein oder Microfasern aufweisen, denn auch dieses Material ist für seine besonders guten feuchtigkeitsabsorbierenden Eigenschaften bekannt.

Um eine sichere Anlage des abnehmbaren Überzugs an der Steuereinheit ohne Verrutschen zu gewährleisten, kann er eine innerste, der äußeren Deckschicht gegenüberliegende, ein Verrutschen des Überzuges gegenüber der mit dem Überzug zu bedeckenden Oberfläche verhindernde Haftschicht aufweisen. Eine solche Haftschicht kann beispielsweise eine Gummierung beinhalten, die zwar durchgehend flächig ausgebildet sein kann, dies aber nicht sein muss. Auch lediglich in bestimmten Strukturen und Mustern aufgebrachte entsprechende Gummierungen oder vergleichbare Haftmaterialien sind denkbar, zum Beispiel in regelmäßig oder unregelmäßig angeordneten Punkten, in Wellenformen geführten Streifen oder dergleichen.

Um für den erfindungsgemäßen abnehmbaren Überzug zu verhindern, dass die von dem mehrlagigen Flächenmaterial, hierbei insbesondere der elastischen und feuchtigkeitsabsorbierenden Schicht aus dem Abstandsmaschen- oder -webstoff, aufgenommene Feuchtigkeit bis zu der Steuereinheit durch- und gegebenenfalls in diese eindringen kann, ist eine auf der der äußeren Deckschicht gegenüberliegenden Seite der elastischen und feuchtigkeitsabsorbierenden Schicht angeordnete feuchtigkeitsundurchlässige Schicht vorgesehen. Diese Schicht wirkt dann wie eine Art Barriere und schützt die empfindliche Steuereinheit vor dem Kontakt mit Feuchtigkeit, insbesondere Handschweiß, der, wie oben bereits erwähnt, zu ernsthaften Schäden der Steuereinheit ausgehend von einem Angriff der Oberfläche des Gehäuses der Steuereinheit bis hin zu einem korrosiven Angriff auf die in der Steuereinheit befindlichen, empfindlichen elektronischen Bauteile führen kann. Eine solche feuchtigkeitsundurchlässige Schicht kann dabei auch in solchen Überzügen zum Einsatz kommen und dort die oben genannten Vorteile erbringen, die eine feuchtigkeitsabsorbierende, elastische Schicht aus einem anderen Material als dem hier als vorteilhaft und erfindungsgemäß zu verwendend genannten Abstandsmaschen- oder -webstoff aufweisen, z.B. wie im in Bezug genommenen Stand der Technik genannte in Form eines geschäumten Materials oder dergleichen. Die feuchtigkeitsundurchlässige Schicht ist durch eine auf eine weitere Lage des mehrmaligen Flächenmaterials aufgebrachte Beschichtung oder durch eine Folie oder eine Membran gebildet, die in dem mehrlagigen Flächenmaterial entsprechend eingebunden ist. Als Material für diese feuchtigkeitsundurchlässige Schicht kommt insbesondere Polyurethan (PU) in Betracht, vor allem, wenn diese Schicht als Beschichtung gebildet ist.

Insbesondere ist der erfindungsgemäße Überzug derart gebildet, dass im auf die Steuereinheit montierten Zustand der Überzug jedenfalls einen Teil der Eingabeeinrichtungen der Steuereinheit überdeckt. Dadurch sollen insbesondere empfindliche Schalter oder Taster, wie zum Beispiel ein Steuerkreuz oder sonstige Taster oder Schalter, einer entsprechenden Steuereinheit zusätzlich geschützt und vor dem Eindringen von Feuchtigkeit, insbesondere Handschweiß, in diesen Bereichen bewahrt werden. Ein derartiges Überdecken der Eingabeeinrichtungen ist insbesondere deshalb möglich, da aufgrund der vergleichsweise geringen Stärke bzw. Dicke des Überzuges, die durch die Verwendung des Abstandsmaschen- oder -webstoffes möglich ist, die entsprechenden Eingabeeinrichtungen für einen Benutzer der Steuereinheit weiterhin erfass- bzw. ertastbar und insoweit ohne Einschränkungen der Funktion bzw. des Bedienkomforts zu bedienen sind, selbst wenn diese von dem Überzug bedeckt sind. Solche Eingabeeinrichtungen wie insbesondere die Analog-Sticks, die nicht überdeckt und dann von dem Nutzer der Steuereinheit noch betätigt werden können, bleiben frei, hier weist der Überzug typischerweise entsprechende Aussparungen auf. Ebenfalls ausgespart werden solche Bereiche, die mit Anschlüssen zum Beispiel für das Einstecken eines Daten- oder Ladekabels versehen sind.

Der Überzug kann des Weiteren mit Vorteil in den Bereichen, in denen er im auf die Steuereinheit montierten Zustand Eingabeeinrichtungen der Steuereinheit überdeckt, Markierungen aufweisen, die die überdeckten Steuereinheit nach ihrer Lage, vorzugsweise auch nach ihrer Art, anzeigen. Diese Markierungen können insbesondere farbige Markierungen und/oder haptisch erkennbare Markierungen sein. Dabei ist unter farbigen Markierungen auch eine solche zu verstehen, die in Grautönen oder in schwarz/weiß lediglich einen Kontrast wiedergibt. Diese Markierungen können Aufdrucke auf der äußeren Deckschicht, entsprechend in die äußere Deckschicht eingestrickte oder eingewebte oder auf sonstige Weise durch in die äußere textile Schicht eingebrachte Fadenführung gekennzeichnete Muster und Hervorhebungen oder dergleichen sein.

Der Abstandsmaschen- oder -webstoff, der für die elastische und feuchtigkeitsabsorbierende Schicht des erfindungsgemäßen Überzuges verwendet wird, kann beispielsweise ein Abstandsgewirk oder auch ein Abstandsgestrick sein.

Der erfindungsgemäße Überzug wird dabei typischerweise so ausgeführt werden, dass er Bereiche aufweist, in die die Steuereinheit eingeschoben werden kann, wiederum andere Bereiche hat, die dann laschenartig um weitere Abschnitte der Steuereinheit herumgelegt werden. Zur Fixierung des Überzuges auf der Steuereinheit wird dieser nach vollständigem Umschließen derjenigen Bereiche der Steuereinheit, die von dem Überzug überdeckt werden sollen, an dann gebildeten Nahtstellen verschlossen, zum Beispiel durch einen Reißverschluss, durch Druckknöpfe, durch Klettverschluss, durch Haken und Ösen oder ähnliche lösbare Verschlussmittel.

Weitere Vorteile und Merkmale der Erfindung ergeben sich aus der nachfolgenden Beschreibung eines Ausführungsbeispiels anhand der beigefügten Figuren. Dabei zeigen:
- Fig. 1: eine schematische dreidimensionale Ansicht einer Steuereinheit in Form eines Controllers;
- Fig. 2: eine der Ansicht aus Fig. 1 vergleichbare Ansicht der Steuereinheit mit einem erfindungsgemäßen Überzug;
- Fig. 3: die mit dem Überzug versehene Steuereinheit in einer Ansicht von hinten;
- Fig. 4: die mit dem Überzug versehene Steuereinheit in einer Ansicht von unten;
- Fig. 5: den Überzug in einer Ansicht von oben;
- Fig. 6: den Überzug in einer Ansicht von vorn;
- Fig. 7: die Steuereinheit mit übergezogenem Überzug, jedoch vor dem Verschließen des Überzuges, in einer Ansicht von unten;
- Fig. 8: nebeneinander angeordnet und jeweils in dreidimensionaler Ansicht von oben die Steuereinheit (rechts) und den Überzug (links), wobei der Überzug zur Position von Betätigungselementen auf der Steuereinheit korrespondierende Markierungen trägt; und
- Fig. 9: schematisch einen Querschnitt durch die Lagen des Materials des Überzuges.

In den Figuren ist ein mögliches Ausführungsbeispiel dargestellt, in welchem die vorstehend in ihrer Allgemeinheit beschriebene Erfindung verwirklicht werden kann. Dieses Ausführungsbeispiel soll nun anhand der Figuren nachstehend beschrieben werden. Dabei ist an dieser Stelle zu betonen, dass die Figuren als rein schematische Zeichnungen zu verstehen sind und keinesfalls maßstabsgerecht. Sie enthalten auch nicht notwendigerweise sämtliche für die konkrete Gestaltung erforderlichen Details in der Darstellung. Solche Details wird der Fachmann aufgrund seines eigenen Fachwissen selbstverständlich ergänzen und in den Figuren und der nachstehenden Beschreibung mitlesen.

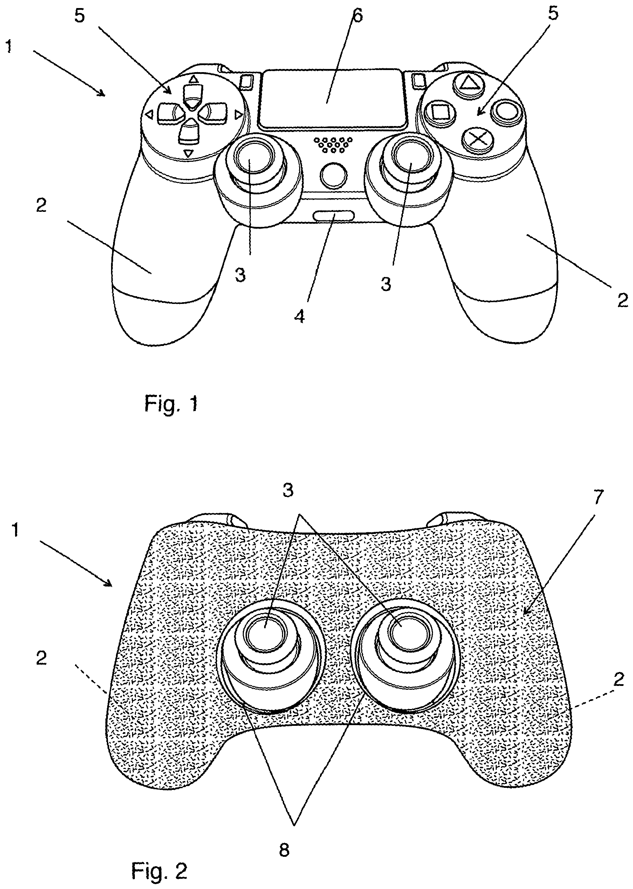

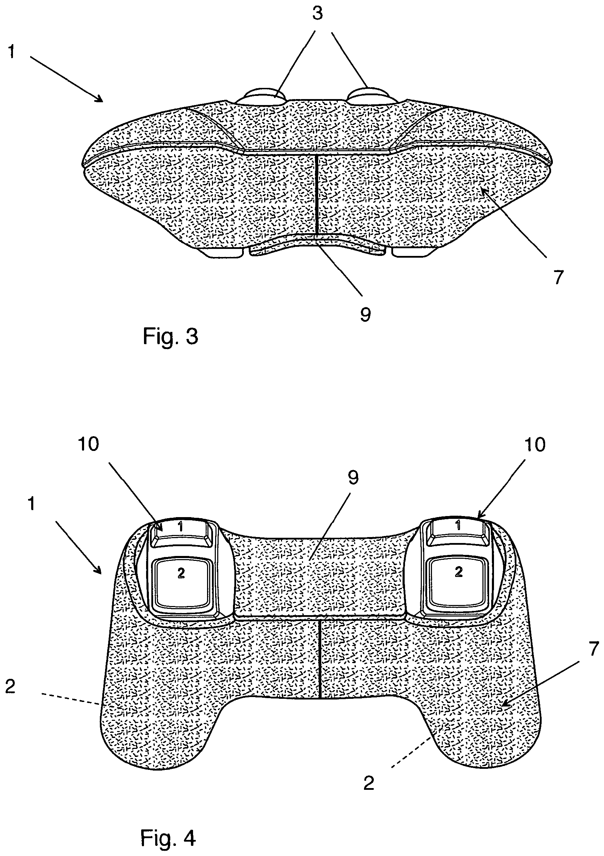

In Figur 1 ist zunächst eine dreidimensionale Ansicht eines Controllers 1 wiedergegeben, wie er aktuell typischerweise für das Steuern von Spielen auf Spielkonsolen oder PCs Verwendung findet. Der hier dargestellte Controller 1 weist zwei hornartig nach hinten vorstehende Griffe 2 auf, um die beim Gebrauch des Controllers 1 die Handflächen gelegt werden, um so den Controller 1 zu ergreifen und zu halten. Für ein Steuern verschiedener Spielfunktionen ist der Controller 1 mit diversen Eingabeeinrichtungen ausgestattet. Hierzu zählen insbesondere zwei Analog-Sticks 3, die von einem Nutzer des Controllers 1 typischerweise mit den Daumen der Hände, mit denen die Griffe 2 erfasst werden, bedient werden, sowie verschiedene Steuerknöpfe 5 und 10 (vergleiche auch Figur 4). Die Steuerknöpfe 5 können zum Beispiel nach Art eines Steuerkreuzes zusammengefasst sein, wie dies die in der Figur 1 links dargestellte Anordnung der Steuerknöpfe 5 ergibt. Weiterhin können als Eingabeeinrichtungen andere derartige Einrichtungen vorgesehen sein, zum Beispiel ein in dem in Figur 1 gezeigten Controller 1 zwischen den Anordnungen der Steuerknöpfe 5 auf der linken und auf der rechten Seite der Darstellung der Figur angeordnetes Touchpad 6. Weiterhin ist eine Ladebuchse 4 zu erkennen, bei der es sich zum Beispiel um eine USB-Ladebuchse handeln kann und über die ein im Innern des Controllers 1 angeordneter Energiespeicher, insbesondere ein Akku, mit einem Ladestrom beaufschlagt werden kann.

Wie in der Figur 1 gezeigte Controller 1 werden, wie bereits erwähnt, von Computer- und Videospielern teilweise äußerst intensiv genutzt, um Spielabläufe in Computer- oder Videospielen zu steuern und zu gestalten. Hierbei werden derartige Geräte häufig auch über sehr lange Zeiträume genutzt, wobei die Anwender, die Spieler, sehr häufig feuchte Hände bekommen und Handschweiß ausbilden, sei dies bedingt durch eine gestiegene Umgebungstemperatur, sei dies durch einen erhöhten Adrenalinspiegel und eine erhöhte Anspannung und Erregung aufgrund des Spiels. Diese Feuchtigkeit bedingt nicht nur, dass die Grifffestigkeit, mit der der Controller 1 an den Griffen 2 gehalten werden kann, leidet, sie führt auch zu potentiellen Beschädigungen des Controllers 1 selbst.

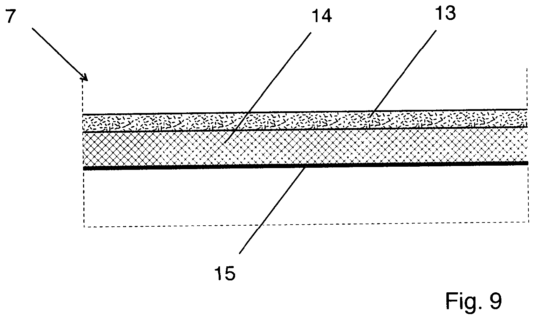

Um dieses nun zu verhindern, sieht die Erfindung einen Überzug 7 vor, wie er - auf einem Controller 1 und um diesen herum positioniert - in Figur 2 dargestellt ist. Zu erkennen ist, dass dieser Überzug 7 den Controller 1 entsprechend seiner Formgebung eng umschließt, so dass dieser weiterhin in seiner ergonomischen Form wirkt und von dem Spieler fest ergriffen werden kann. Zu erkennen ist ferner, dass der Überzug 7 sowohl die in Figur 1 dargestellten Steuerknöpfe 5 als auch das Touchpad 6 überdeckt, dass lediglich Öffnungen 8 vorgesehen sind, durch die hindurch die Analog-Sticks 3 hervorstehen und von dem Überzug 7 entsprechend nicht bedeckt sind. Ein Überdecken insbesondere der Steuerknöpfe 5 bedingt, dass diese gleichermaßen vor vordringender Feuchtigkeit und vor Handschweiß geschützt sind, wobei sie durch den Überzug 7 hindurch für den Spieler weiterhin problemlos und komfortabel zu bedienen sind, da der Überzug 7 an sich einerseits eng anliegend, andererseits in seiner Dicke ausreichend dünn gestaltet ist. Die Analog-Sticks 3 hingegen können von dem Spieler nur dann ausreichend sicher bedient werden, wenn sie von dem Überzug 7 nicht bedeckt sind. Der Überzug 7 ist, wie nachfolgend noch anhand der Figur 9 erläutert werden wird, mehrlagig gebildet und weist, wie die Veranschaulichung in Figur 2 und auch in den weiteren Figuren 3 bis 8 erkennen lässt, eine textile äußere Oberfläche auf, die mit einem quer zu Oberfläche vorstehenden Flor versehen ist, zum Beispiel mit Schlingen, wie bei einem Frottee, oder auch mit einem offenen Flor, wie zum Beispiel bei einem Microaserstoff. Diese textile äußere Oberfläche ist insbesondere so gewählt, dass sie eine hohe Saugfähigkeit aufweist und entstehende Feuchtigkeit, insbesondere Handschweiß, gut und effizient aufnehmen und abführen kann.

Die Figuren 3 und 4 zeigen den mit dem Überzug 7 versehenen Controller 1 in zwei weiteren Darstellungen, nämlich einmal von hinten, also von den Griffen 2 her gesehen (Figur 3) und einmal in einer Ansicht von unten (Figur 4). In diesen Figuren ist zudem eine - hier geschlossene - Lasche 9 zu sehen, und es sind die weiteren, an einer den Griffen 2 gegenüberliegenden vorderen Stirnseite angeordneten Steuercknöpfe 10 zu erkennen, die während der Verwendung des Controllers 1 mit den Zeigefingern der an den Griffen 2 anliegenden Hände bedient werden.

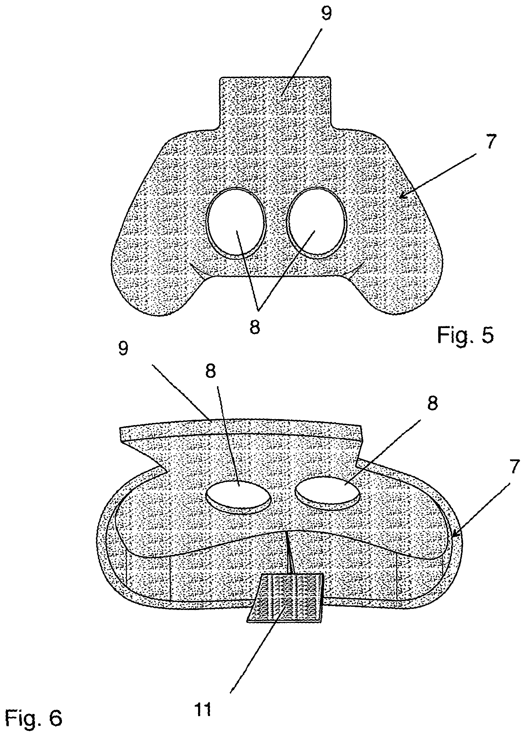

Die Figuren 5 und 6 zeigen den Überzug 7, ohne dass dieser über einen Controller 1 geführt und mit einem solchen verbunden wäre. Zu erkennen ist, dass der Überzug 7 taschenartig gebildet ist mit einer Öffnung, in die der Controller 1, hier mit den Griffen 2 voran, eingebracht und eingeschoben wird. Das Schnittmuster des Überzuges 7 ist dabei so gewählt, dass es sich der Außenform des Controllers 1 eng anliegend anpasst, wenn letzterer in den Überzug 7 eingeführt wird. Die Einfädelöffnung wird in diesem Ausführungsbeispiel durch die Lasche 9 verschlossen, wobei hier ein Klettband 11 vorgesehen ist, welches mit der Lasche 9 zusammengebracht wird, diese dann in der verschlossenen Position hält. Selbstverständlich sind hier auch andere Arten eines Verschlusses möglich, wie zum Beispiel Knöpfe, Druckknöpfe, ein Reißverschluss oder dergleichen. Wichtig ist allerdings, dass der Überzug 7 eine Öffnung aufweist, die verschlossen und geöffnet werden kann, um den Überzug 7 auf einen Controller 1 aufzusetzen oder von diesem wiederum abzunehmen, um ihn auszuwechseln und insbesondere nach langem Gebrauch zu reinigen (zum Beispiel zu waschen). Die Öffnung des Überzuges wird in ihrer Lage dabei typischerweise so gewählt, dass sie bzw. ein Verschluss derselben im auf dem Controller 1 aufgebrachten Zustand nicht in den Griffbereich, in dem ein Spieler den Controller 1 ergreift, hineinragt und so nicht als störend empfunden wird.

Das Material, aus dem der Überzug 7 gefertigt istk, weist vorzugsweise eine gewisse Elastizität in der Fläche auf, so dass es sich stretchartig an den Controller 1, den er aufnimmt und umschließt, eng anliegend anschmiegt, so dass die Form des Controllers 1 weiterhin gegeben und für den Spieler spürbar bleibt.

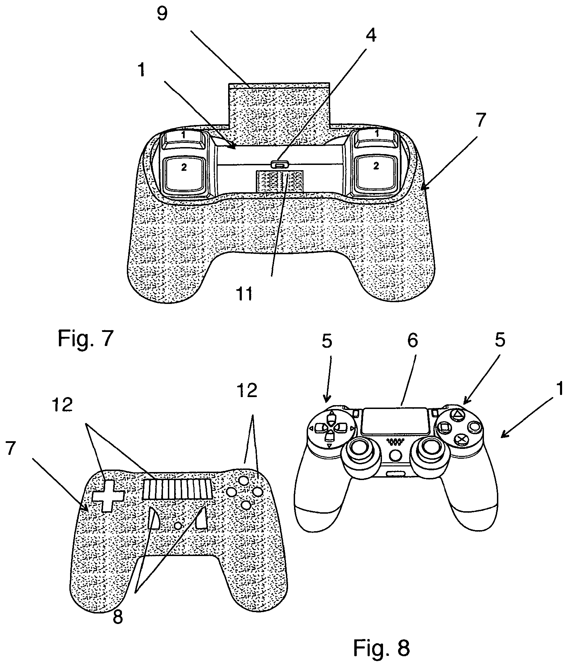

In Figur 7 ist der Controller 1 dargestellt, wie er in den taschenartig geöffneten Überzug 7 eingesetzt ist, ohne dass jedoch bereits die Lasche 9 verschlossen wäre. Gut zu erkennen sind in dieser Figur die einander gegenüberliegenden Elemente Lasche 9 und Klettband 11, über die der Überzug 7 verschlossen und an dem Controller 1 gesichert wird. Hier nicht dargestellt, jedoch zu bevorzugen, ist, wenn der Überzug 7 in dem Bereich, in dem die Ladebuchse 4 angeordnet ist, eine weitere Öffnung aufweist, durch die ein Ladekabel mit einem Anschlussstecker in die Ladebuchse 4 eingeführt werden kann. In dem hier gezeigte Ausführungsbeispiel wäre eine entsprechende Öffnung in der Lasche 9 anzubringen.

Figur 8 zeigt nebeneinander angeordnet den Überzug 7 (links) und den Controller 1 (rechts), wobei hier der Überzug 7 erkennbar Markierungen 12 aufweist, die dem Anzeigen der bei in dem Überzug 7 angeordnetem Controller 1 an den entsprechenden Stellen angeordneter Eingabeeinheiten, der Steuerknöpfee 5 und auch des Touchpads 6, dienen. Diese Markierungen können auf die textile Oberfläche des Überzugs 7 aufgedruckt, aufgeflockt oder in sonstiger Weise aufgebracht sein. Die Markierungen können auch in die textile Oberfläche des Überzug 7 eingestickt oder eingewebt/ eingewirkt sein.

In Figur 9 ist ein schematischer Querschnitt durch das mehrlagig aufgebaute Material des Überzuges 7 dargestellt, welcher den Aufbau des erfindungsgemäßen Überzuges 7 aufzeigt. Diese Querschnittsdarstellung ist insbesondere nicht maßstabsgerecht, sondern als reine Prinzipdarstellung zu verstehen.

Zu erkennen ist eine in der Verwendung des Bezuges äußere textile Deckschicht 13, eine unterhalb der Deckschicht 13 angeordnete elastische Schicht 14, die insbesondere auch in einer Richtung quer zur Ebene des Materials des Überzuges 7 elastisch ist und die in erfindungsgemäßer Weise durch einen Abstandsmaschen- oder -webstoff gebildet ist, sowie eine unterhalb der elastischen Schicht 14, also einer Innenseite des Überzuges 7 zugewandt, ausgebildete feuchtigkeitsundurchlässige Schicht 15.

Die textile Deckschicht 13 kann als eine Deckschicht des Abstandsmaschen- oder - webstoffes der elastischen Schicht 14 gebildet und insoweit gleichermaßen ein Bestandteil dieser Lage sein. Sie kann aber auch gesondert hergestellt und mit der elastischen Schicht 14 verbunden sein, zum Beispiel durch Kaschieren. Die textile Deckschicht 13 kann ferner insbesondere mit Polschlingen oder offenflorigen Polfäden gebildet sein, zum Beispiel als ein Frottee oder auch aus Mikrofaser, um so Feuchtigkeit besonders gut aufnehmen und transportieren zu können. Die erfindungsgemäß als Abstandsmaschen- oder -webstoff ausgebildete elastische Schicht 14 ist durch die besondere erfindungsgemäße Gestaltung in hohem Maße geeignet, Feuchtigkeit aufzunehmen und zu speichern, so dass der so gebildete Überzug 7 auch bei lang andauernder Anwendung eine effektive Wirkung im Hinblick auf ein Trockenhalten der Hände des Benutzers hat. Die feuchtigkeitsundurchlässige Schicht 15, bei der es sich zum Beispiel um eine Beschichtung mit einem Polymermaterial, zum Beispiel Polyurethan (PU), aber auch um eine aufkaschierte folienartige Lage, eine eingelegte Folie oder Membran oder dergleichen handeln kann, verhindert dabei, dass in der elastischen, feuchtigkeitsaufnehmenden Schicht 14 absorbierte und gespeicherte Feuchtigkeit weiter vordringen kann hin zu dem mit dem Überzug 7 bezogenen Controller 1.

Die feuchtigkeitsundurchlässige Schicht 14 kann optional hinzugefügt werden, ist für die Verwirklichung der Erfindung nicht zwingend erforderlich. Zudem kann, um ein Abrutschen des Überzuges 7 von dem Controller 1 zu verhindern und einen festen Sitz des Überzuges 7 auf dem Controller 1 zu gewährleisten, vorgesehen sein, haltgebende Strukturen oder Elemente vorzusehen, die als Rutschsicherung dienen. Diese Aufgabe kann zum Beispiel auch die feuchtigkeitsundurchlässige Schicht 15-übernehmen, es können aber auch gesonderte Strukturen oder Elemente aufgebracht und vorgesehen sein, wie zum Beispiel eine Gummierung, die durchgehend oder auch in Form von Noppen, Rippen, Wellen oder sonstigen Strukturen ausgebildet sein kann. Solche Strukturen sind in der Figur 9 nicht dargestellt, würden dort an der zuunterst dargestellten Position, also auf der Innenseite des Überzuges 7 angeordnet werden.

### Bezugszeichenliste

- 1: Controller
- 2: Griff
- 3: Analog-Stick
- 4: Ladebuchse
- 5: Steuerknöpfe
- 6: Touchpad
- 7: Überzug
- 8: Öffnung
- 9: Lasche
- 10: Steuerknöpfe
- 11: Klettband
- 12: Markierung
- 13: textile Deckschicht
- 14: elastische Schicht
- 15: feuchtigkeitsundurchlässige Schicht

## Patentansprüche

1. Abnehmbarer Überzug (7) für eine Eingabeeinrichtungen (3, 5, 6, 10) aufweisende Steuereinheit (1), insbesondere für *einen Controller für* Spielkonsolen *oder* PCs, der hinsichtlich seiner Formgebung an die Form der zu überdeckenden Bereiche der Steuereinheit (1) passgenau angepasst ist und aus einem mehrlagigen Flächenmaterial besteht, welches wenigstens eine textile äußere Deckschicht (13) und eine elastische und feuchtigkeitsabsorbierende Schicht (14) aufweist, **dadurch gekennzeichnet, dass** die elastische und feuchtigkeitsabsorbierende Schicht (14) durch einen Abstandsmaschen- oder -webstoff gebildet ist, der ein aus Fäden oder Filamenten hergestelltes Stoffprodukt ist, welches durch Vermaschen, insbesondere Wirken oder Stricken, oder durch Webtechnik gebildet wird und welches zwei flächig ausgebildete gewebte oder vermaschte Schichten und wenigstens einen zwischen diesen Schichten geführten, die Schichten miteinander verbindenden, jedoch auch auf Abstand haltenden Abstandsfaden aufweist, und, dass der Überzug eine auf der der äußeren Deckschicht (13) gegenüberliegenden Seite der elastischen und feuchtigkeitsabsorbierenden Schicht (14) angeordnete feuchtigkeitsundurchlässige Schicht (15) aufweist, die als eine Beschichtung, eine Folie oder eine Membran ausgeführt ist.

2. Überzug (7) nach Anspruch 1, **dadurch gekennzeichnet, dass** die textile äußere Deckschicht (13) durch eine Deckschicht des Abstandsmaschen- oder webstoffs gebildet ist.

3. Überzug (7) nach Anspruch 1, **dadurch gekennzeichnet, dass** die textile äußere Deckschicht (13) eine gesonderte, auf eine Außenfläche des Abstandsmaschen- oder -webstoffs aufgebrachte Textilschicht ist.

4. Überzug (7) nach einem der vorhergehenden Ansprüche, **dadurch gekennzeichnet, dass** die textile äußere Decksicht (13) ein Polschlingen ausbildendes Textil ist.

5. Überzug (7) nach einem der vorhergehenden Ansprüche, **dadurch gekennzeichnet, dass** er eine innerste, der äußeren Deckschicht (13) gegenüberliegende, ein Verrutschen des Überzuges (7) gegenüber der mit dem Überzug (7) zu bedeckenden Oberfläche verhindernde Haftschicht aufweist.

6. Überzug (7) nach einem der vorhergehenden Ansprüche, **dadurch gekennzeichnet, dass** er derart gebildet ist, dass im auf die Steuereinheit (1) montierten Zustand der Überzug jedenfalls einen Teil der Eingabeeinrichtungen (3, 5, 6, 10) der Steuereinheit (1) überdeckt.

7. Überzug (7) nach Anspruch 6, **dadurch gekennzeichnet, dass** er in den Bereichen, in denen er im auf die Steuereinheit (1) montierten Zustand Eingabeeinrichtungen (5, 6) der Steuereinheit (1) überdeckt, Markierungen (12), insbesondere farbige Markierungen und/oder haptisch erkennbare Markierungen, aufweist, die die überdeckten Steuereinheiten (5, 6) nach ihrer Lage, vorzugsweise auch nach ihrer Art, anzeigen.

8. Überzug nach einem der vorhergehenden Ansprüche, **dadurch gekennzeichnet, dass** der Abstandsmaschen- oder -webstoff ein Abstandsgewirk oder ein Abstandsgestrick ist.

## Claims

1. A removable cover (7) for input devices (3, 5, 6, 10) comprising:
the control unit (1), in particular *for a controller for game consoles or games,* PCs, which is adapted to the shape of the areas of the control unit (1) to be covered with a perfect fit and consists of a multilayer sheet material which has at least one textile outer cover layer (13) and an elastic and moisture-absorbing layer (14), **characterised in that** the elastic and moisture-absorbing layer (14) is formed by a spacer knitted or woven fabric which is a fabric product made of threads or filaments, which is formed by meshing, in particular knitting, or by weaving, and which has two flat woven or meshed layers and at least one spacer thread guided between these layers and connecting the layers to one another but also keeping them at a distance, and that the cover has a moisture-impermeable layer (15) arranged on the side of the elastic and moisture-absorbing layer (14) opposite the outer cover layer (13), which is used as a bea film or a membrane for the layering.

2. The cover (7) according to claim 1, **characterised in that** the textile outer cover layer (13) is formed by a cover layer of the spacer mesh or woven fabric.

3. The cover (7) according to claim 1, **characterised in that** the textile outer cover layer (13) is a separate woven fabric is a textile layer applied to an outer surface of the spacer.

4. The cover (7) according to one of the previous claims, **characterised in that** that the textile outer cover (13) is a textile forming pile loops.

5. The cover (7) according to one of the preceding claims, **characterised in that** it has an innermost, outermost top layer (13) opposite the cover (7) which prevents the cover (7) from slipping relative to the surface to be covered by the cover (7).

6. The cover (7) according to any of the preceding claims, **characterised in that** it is formed in such a way that, when mounted on the control unit (1), in any case, the cover covers part of the input devices (3, 5, 6, 10) of the control unit (1).

7. The cover (7) according to claim 6, **characterised in that** in the areas in which it covers input devices (5, 6) of the control unit (1) in the state mounted on the control unit (1), it indicates markings (12), in particular colored markings and/or haptically recognizable markings, onwhich indicate the covered control units (5, 6) according to their location, preferably also according to their type.

8. The cover according to any of the preceding claims, **characterised in that** the spacer knitted or woven fabric is a spacer knitted fabric or a spacer woven fabric.

## Revendications

1. Garniture de protection amovible (7) pour les dispositifs de saisie (3, 5, 6, 10) comprenant:
le module de commande (1), en particulier *pour un module de commande pour consoles de jeux ou jeux,* PC, qui est adapté à la forme de zones du module de commande (1) avec un ajustement parfait et se compose d'un matériau en feuille multicouche qui présente au moins une couche de garniture de protection extérieure textile (13) et une couche élastique et absorbant l'humidité (14), **caractérisé en ce que** la couche élastique et absorbant l'humidité (14) est formée par un tissu tricoté ou tissé d'espacement qui est un produit textile fait de fils ou de filaments, qui est formée par maillage, en particulier par tricotage, ou par tissage, et qui présente deux couches tissées ou maillées à plat et au moins un fil d'écartement guidé entre ces couches et reliant les couches entre elles mais les maintenant également à distance, et **en ce que** la garniture de protection présente une couche (15) imperméable à l'humidité disposée sur le côté de la couche (14) élastique et absorbant l'humidité opposé à la couche de garniture de protection (13) extérieure, qui est utilisée comme feuille béa ou comme membrane pour la stratification.

2. Garniture de protection (7) selon la revendication 1, **caractérisée en ce que** la couche de garniture de protection extérieure textile (13) est formée par une couche de garniture de protection de la maille d'espacement ou du tissu d'espacement.

3. Garniture de protection (7) selon la revendication 1, **caractérisée en ce que** la couche de garniture de protection extérieure textile (13) est un tissu séparé est une couche textile appliquée sur une surface extérieure de l'espaceur.

4. Garniture de protection (7) selon l'une des revendications précédentes, **caractérisée en ce que** la garniture de protection extérieure textile (13) est un textile formant des boucles de poils.

5. Garniture de protection (7) selon l'une des revendications précédentes, **caractérisée en ce qu'**elle comporte une couche supérieure (13) la plus intérieure et la plus extérieure, opposée à la garniture de protection (7), qui empêche la garniture de protection (7) de glisser par rapport à la surface à couvrir par la garniture de protection (7).

6. Garniture de protection (7) selon l'une des revendications précédentes, **caractérisée en ce qu'**il est formé de telle manière que, lorsqu'il est monté sur le module de commande (1), dans tous les cas, le garniture de protection couvre une partie des dispositifs d'entrée (3, 5, 6, 10) du module de commande (1).

7. Garniture de protection (7) selon la revendication 6, **caractérisée en ce que** dans les zones dans lesquelles il recouvre les dispositifs d'entrée (5, 6) du module de commande (1) dans l'état monté sur le module de commande (1), il indique des marquages (12), en particulier des marquages colorés et/ou des marquages haptiquement reconnaissables, sur lesquels les modules de commande couverts (5, 6) sont indiqués selon leur emplacement, de préférence également selon leur type.

8. Garniture de protection selon l'une des revendications précédentes, **caractérisée en ce que** le matériau tricoté ou tissé d'espacement est une étoffe tricotée ou tissée d'espacement.
